Europäisches Patentamt

European Patent Office

Office européen des brevets

(19)

(11) Numéro de publication: **0 265 912 B1**

# (12) FASCICULE DE BREVET EUROPEEN

(45) Date de publication de fascicule du brevet:
10.04.91

(51) Int. Cl.5: **G02B 1/00**, G02B 5/08,
H01S 3/08

(21) Numéro de dépôt: 87115784.8

(22) Date de dépôt: 27.10.87

(54) Miroir multidielectrique notamment pour l'infrarouge moyen notamment pour laser a dioxyde de carbone.

(30) Priorité: 28.10.86 FR 8614971

(43) Date de publication de la demande:
04.05.88 Bulletin 88/18

(45) Mention de la délivrance du brevet:
10.04.91 Bulletin 91/15

(84) Etats contractants désignés:
AT BE CH DE ES FR GB IT LI NL SE

(56) Documents cités:
FR-A- 2 326 713
FR-A- 4 388 344

APPLIED OPTICS, vol. 18, no. 17, 1er septembre 1979, pages 2979-2989, Optical Society of America, New York, US; A.M. LEDGER: "Inhomogeneous interface laser mirror coatings"

(73) Titulaire: **LASERDOT**
**Route de Nozay**
**F-91460 Marcoussis(FR)**

(72) Inventeur: **Mouchart, Jacques**
**34, avenue du Général Leclerc**
**F-94240 L'Hay Les Roses(FR)**
Inventeur: **Villela, Gérard**
**20, rue Moutard Martin**
**F-91460 Marcoussis(FR)**
Inventeur: **Dutois, Franck**
**5 et 6 Impasse des Sept Vertus**
**F-92160 Antony(FR)**
Inventeur: **Pointu, Bernard**
**2, rue des Pierreux**
**F-91610 Ballancourt(FR)**

(74) Mandataire: **Weinmiller, Jürgen**
**Lennéstrasse 9 Postfach 24**
**W-8133 Feldafing(DE)**

Rank Xerox (UK) Business Services

## Description

On entend ici par infrarouge moyen la lumière dont la longueur d'onde est comprise entre un et douze micromètres. Une telle lumière est notamment celle que produisent les lasers les plus utilisés pour produire des énergies importantes, à savoir les lasers à dioxyde de carbone ($CO_2$). Les miroirs de ces derniers doivent réfléchir le rayonnement émis au voisinage de la longeur d'onde 10,6 micromètres. On sait que leurs surfaces réfléchissantes doivent présenter autant que possible les qualités suivantes :
- une haute réflectance
- une limite élevée de tenue à la densité de puissance
- une dureté mécanique excellente
- une très bonne tenue aux agressions chimiques extérieures.

Mais toutes ces qualités ne peuvent être obtenues simultanément avec les matériaux classiques utilisés jusqu'à présent.

L'état actuel de la technique est plus précisément le suivant :

Les surfaces métalliques polies telles que le cuivre, le molybdène ou l'acier inoxydable utilisées comme miroirs sont réfléchissantes dans l'infrarouge mais n'ont pas une réflectance suffisamment élevée pour l'emploi qu'on veut en faire, la réflectance souhaitée devant être supérieure à 0,009. Les réflectances de ces matériaux se situent respectivement aux environs de 0,99 - 0,98 et 0,90 à la longueur d'onde considérée. On peut lire à ce sujet l'article "Pulsed $CO_2$ Laser Damage in Windows Reflectors and Coatings", Wang, Rudisill, Giuliano, Braunstein and Braunstein, NBS special publication n ° 414 - Laser induced damage in optical material. La tenue en puissance des trois matériaux cités est élevée, mais le cuivre est un matériau mou et présente de ce fait une résistance mécanique insuffisante.

Une augmentation de la réflectance est obtenue par adjonction d'une couche d'argent ou d'or sur le support métallique. On sait que ces deux métaux présentent dans l'infrarouge les réflectances les plus élevées (0,993 et 0,988) et ont des seuils de tenue en puissance importants. Des techniques d'évaporation sous vide ou de pulvérisation cathodique sont parmi les méthodes les plus couramment employées pour les fabriquer. Un autre intérêt de leur utilisation réside dans le fait que des matériaux non métalliques peuvent alors être employés comme support. On peut mentionner par exemple le silicium bien que son coefficient de réflexion propre soit peu élevé (R = 0,30), dès lors que l'épaisseur de la couche métallique déposée est suffisamment importante pour être considérée comme massive. Cette condition est réalisée lorsque l'épaisseur de cette couche est de l'ordre de grandeur de quelques centièmes de la longueur d'onde. Une épaisseur de 150 nm est bien souvent suffisante. Cependant l'argent n'a pas une bonne tenue chimique à l'environnement car il présente une très grande affinité pour le soufre ; en outre, en ce qui concerne les propriétés mécaniques, l'or et l'argent n'ont pas une dureté suffisante.

Une méthode classique couramment utilisée pour augmenter la réflectance consiste à réaliser un empilement de couches diélectriques alternées à haut indice $n_H$ et bas indice $n_B$ tels que leurs épaisseurs optiques $n_H e_H$ et $n_B e_B$, $e_H$ et $e_B$ désignant les épaisseurs géométriques des couches, soient d'un quart de longueur d'onde ou au voisinage de ce quart au dessus du support déjà recouvert d'or ou d'argent. On sait que la réflectance d'une couche métallique rapportée à son indice complexe n-ik $i^2$ valant -1, n étant l'indice de réfraction et k l'indice d'extinction, est donnée par la relation

$$R = 1 - \frac{4n}{(1+n)^2 + k^2}$$

Avec un empilement de 2p couches diélectriques transparentes, c'est-à-dire à indices d'extinction sensiblement nuls, la réflectance est accrue à la valeur

$$R = 1 - \frac{4 q n}{(q + n)^2 + k^2} \qquad \text{avec} \quad q = \left(\frac{n_B}{n_H}\right)^{2p}$$

la couche d'indice $n_B$ étant déposée sur la couche métallique. Pour que la réflectance soit la plus élevée possible, il est souhaitable, pour un même nombre de couches, que l'indice du matériau à bas indice soit le plus bas possible et celui du matériau à haut indice le plus haut possible.

Dans la pratique, les diélectriques sont toujours au moins un peu absorbants (leurs indices d'extinction $K_H$ et $K_B$ ne sont pas rigoureusement nuls). La réflectance limite ne tend plus vers 1 lorsque le nombre de couches croît indéfiniment, mais vers une valeur limite donnée par Koppelmann

$$R_{limite} = 1 - 6,283 \frac{k_H + k_B}{n_H^2 - n_B^2}$$

On voit donc que pour obtenir des réflectances élevées il est nécessaire que les matériaux choisis soient très peu absorbants ($k_H$ et $k_B$ inférieurs ou égaux à quelques $10^{-4}$).

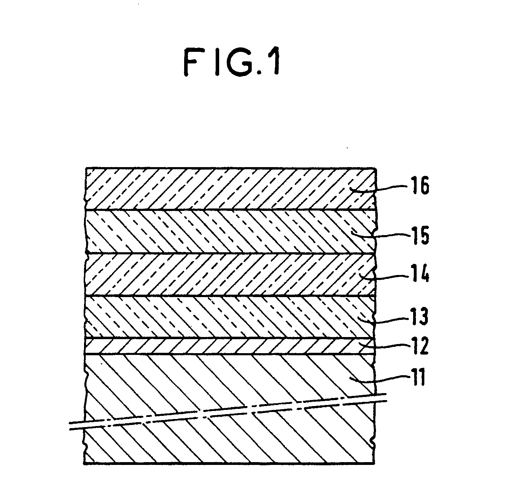

A titre d'exemple on a représenté figure 1 un dépôt réalisé à partir d'un support de molybdène 11 sur lequel on a déposé successivement, par évaporation sous vide, une couche d'argent 12 puis deux paires de couches diélectriques quarts d'ondes de fluorure de thorium 13 et 15 d'indice 1,35 et de sulfure de zinc 14 et 16 d'indice 2,2. Ce type de revêtement a une réflectance de 0,996 et présente une limite élevée de tenue en puissance. Cependant comme la majorité des matériaux transparents au voisinage de la longueur d'onde de 10,6 micromètres ne sont pas d'une grande dureté, le dépôt final ne présente pas la tenue mécanique suffisante.

Une amélioration est obtenue en déposant sur l'argent ou l'or ou sur l'empilement de couches diélectriques une fine couche dure d'un matériau diélectrique protecteur tel qu'un fluorure ($MgF_2$, $ThF_4$, $CeF_3$ ou $LaF_3$) ou un oxyde ($TiO_2$, $ZrO_2$, $CeO_2$, $HfO_2$, $Y_2O_3$). Dans ces conditions or, argent ou empilement sont mieux protégés mécaniquement et chimiquement. Toutefois subsistent deux défauts majeurs:

- La protection mécanique et chimique conduit nécessairement à une baisse de la réflectance. Cette baisse est d'autant plus importante que l'indice du matériau protecteur choisi est plus élevé, que l'épaisseur de la couche est plus forte et que son absorption dans l'infrarouge est plus importante.
- La structure de la couche diélectrique déposée présente généralement des lacunes (trous) réparties en colonnes. Ces lacunes sont inhérentes au procédé de fabrication. Elles se remplissent de vapeur d'eau quand le dépôt est placé dans l'air et empêchent la protection chimique aux agents extérieurs d'être suffisamment efficace. On peut lire à ce sujet l'article : APPLIED OPTICS, vol. 18, no. 17, 1 septembre 1979, pages 2979-2989, Optical Society of America, New York, US ; A, M. LEDGER : "Inhomogeneous interface laser mirror coatings".

D'autres couches de protection peuvent être obtenues avec des matériaux amorphes tels que le carbone dont la dureté est grande (3000Kg/mm²) et la porosité très faible. Cependant l'utilisation de ce matériau ne permet pas d'obtenir des réflectances suffisantes compte tenu de l'absorption résiduelle de la couche et de son indice de réfrection trop élevé (n de l'ordre de 1,8) pour ces conditions d'utilisation. On peut lire à ce sujet l'article :

Properties and coating rates of diamond-like carbon films produced by R.F. glow discharge of hydrocarbon gases, L.P. ANDERSSON - S.BERG - H NORSTOM - R. OLAISON - S. TOWTA - Thin solid films 63 (1979) 155-160.

Quoique le problème exposé ci-dessus de concilier des qualités optiques et de protection soit actuellement posé dans le domaine particulier de l'infrarouge moyen, il est clair qu'il pourrait aussi se poser à l'avenir dans d'autres domaines du spectre.

La présente invention a notamment pour but de réaliser un empilement de couches permettant d'obtenir à la fois la très haute réflectance que doit notamment présenter un miroir de laser à dioxyde de carbone, et une bonne protection contre les agressions mécaniques.

Elle a aussi pour but d'obtenir une bonne protection contre les agents atmosphériques et une limite élevée de tenue à la puissance d'un flux lumineux tel que celui d'un laser de puissance à dioxyde de carbone.

Et elle a pour objet un miroir multidiélectrique pour réfléchir une lumière située notamment dans l'infrarouge moyen, notamment celle d'un laser à dioxyde de carbone, ce miroir comportant

- un substrat,
- un réflecteur sur ce substrat, ce réflecteur étant formé par un empilement de couches quart d'onde qui se succèdent à partir du substrat, ces couches étant essentiellement constituées de matériaux diélectriques à faible absorpticn pour la dite lumière à réfléchir et alternativement à bas et à haut indice de réfraction en terminant par une dernière couche à indice haut, chacune de ces couches présentant une épaisseur optique voisine du quart de la longueur d'onde de cette lumière de manière à conférer une réflectance élevée au dit miroir,
- La dernière couch du réflecteur comportant une couche superficielle de protection constituée d'un matériau diélectrique protecteur de dureté plus grande que celle dudit matériau diélectrique à haut indice,
- ce miroir étant caractérisé par le fait qu'au moins la dernière desdites couches quart d'onde de haut

3

indice est une couche composite qui comporte

- une couche de base dont l'épaisseur optique est une fraction majoritaire de celle de ladite couche composite et qui est constituée d'un dit matériau diélectrique à faible absorption et à haut indice,
- et ladite couche superficielle de protection, l'épaisseur optique de cette couche de protection constituant une fraction minoritaire de celle de ladite couche composite, ledit matériau protecteur présentant un indice de réfraction plus haut que celui dudit matériau diélectrique à faible absorption et à indice haut, de manière à obtenir à la fois une protection au moins mécanique de l'empilement et une réflectance accrue même si l'absorption dudit matériau protecteur est modérément plus élevée pour ladite lumière que celle des dits matériaux diélectriques à faible absorption.

De préférence, selon l'invention, ledit matériau protecteur présente une structure amorphe et il est plus particulièrement constitué par du silicium amorphe hydrogéné. La proportion d'hydrogène dans ce dernier est de préférence comprise entre 5 % et 20 % en moles.

D'autres matériaux sont cependant envisageables quoique apparemment moins favorables tels que le germanium amorphe, les alliages germanium-silicium amorphes, carbone-silicium amorphes etc...

L'emploi de silicium amorphe hydrogéné a été déjà proposé pour constituer des couches d'épaisseur quart d'onde de haut indice d'un miroir multicouches dans l'infrarouge proches, à savoir pour la longueur d'onde 1,06 micrometre. Il présente en effet un indice de réfraction élevé ($n_{si}$ de l'ordre de 3). On peut lire à ce sujet l'article : Recent developments in reactively sputtered optical thin films WT.PAWLEWICZ, P.M. MARTIN, DD.HAYS, I.B. MANN, SPIE vol 325 optical thin films (1982) -105 - 116.

Cependant dans l'infrarouge moyen, son indice d'extinction $k_{si}$ est assez élevé (de l'ordre de $10^{-2}$) de sorte que son absorption est encore trop grande pour envisager son utilisation en couche d'épaisseur voisine du quart d'onde. Outre son indice élevé ce matériau présente les propriétés remarquables suivantes :

- une porosité très faible du fait de son caractère amorphe,
- une grande dureté et une grande inertie à bon nombre d'agents chimiques.

C'est pourquoi, dans le cadre de l'invention, on a réalisé un revêtement de haut indice au niveau de la dernière couche déposée, cette couche composite étant constituée d'une couche à haut indice du type connu, mais avec une épaisseur plus faible, et d'une couche de silicium amorphe hydrogéné.

L'épaisseur optique total e de cette couche composite est voisine du quart de la longueur d'onde. La couche de silicium amorphe, dernière déposée, en contact avec l'atmosphère, sert à la fois de couche optique active et de couche de protection.

Dans la pratique les matériaux à hauts indices connus comme par exemple le ZnS ou le ZnSe ont des indices de réfraction et d'extinction inférieurs à ceux du silicium. Si on les emploie les calculs théoriques et l'expérience montrent non seulement que la réflectance n'est pas diminuée de manière gênante par la présence de silicium amorphe hydrogéné, mais qu'il existe des épaisseurs optimales de silicium et de matériau connu à haut indice qui donnent à la réflectance une valeur supérieure à ce qu'elle serait si ce matériau à haut indice avait été utilisé seul : l'emploi du silicium en dernière couche augmente la réflectance. Cette augmentation est bien entendu liée au fait que l'épaisseur de silicium est faible et que son absorption reste limitée.

A l'aide des figures schématiques ci-jointes on va décrire plus particulièrement ci-après, à titre d'exemple non limitatif, comment la présente invention peut être mise en oeuvre. Il doit être compris que les éléments mentionnés peuvent être remplacés par d'autres élements assurant les mêmes fonctions techniques.

La figure 1 représente une vue en coupe d'un miroir connu qui a été décrite ci-avant.

La figure 2 représente une vue en schéma par blocs d'un dispositif de dépôt pour former une couche de protection selon l'invention.

La figure 3 représente une vue d'un miroir selon l'invention.

Le silicium amorphe est un matériau bien connu dans le domaine de l'électronique et de la conversion photovoltaïque de l'énergie.

On peut lire à ce sujet l'article :

SPEAR - LECOMBER - Electronic properties of substitutionally doped amorphous Si and Ge, Philosophical magazine, 1979, Vol 33 n ° 6, 935-949.

Il peut être déposé selon plusieurs méthodes telles que pulvérisation cathodique, pulvérisation par faisceau d'ions, décomposition chimique en phase vapeur assistée par plasma continu ou radiofréquence.

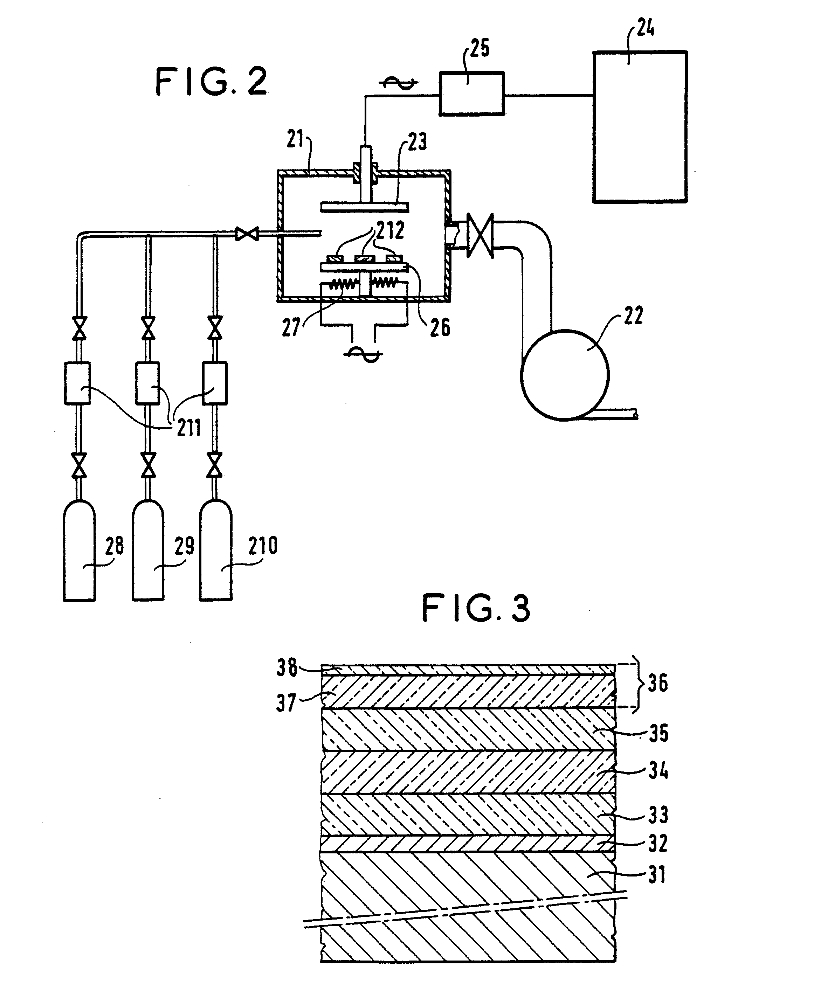

La décomposition chimique en phase vapeur assistée par plasma radiofréquence est la plus répandue et va être décrite à titre d'exemple à l'aide de la figure 2. Un réacteur est constitué d'une enceinte 21 dans laquelle la pression est réduite par une pompe à vide 22, d'une cathode 23 reliée à un générateur radiofréquence 24 par l'intermédiaire d'un module d'accord 25, et d'une anode 26 pouvant être chauffée à l'aide des résistances 27. Un mélange gazeux est formé à partir de réservoirs de silane (SiH$_4$) 28 et éventuellement d'hydrogène 29 ou d'un autre gaz porteur 210. Il est acheminé dans le réacteur par l'intermédiaire de débitmètres 211. Il se décompose dans le plasma créé par la puissance radiofréquence appliquée à la cathode. Les produits de réaction se déposent sur les substrats 212 et forment un film mince constitué de silicium amorphe dont les liaisons chimiques brisées sont compensées par l'hydrogène. Les propriétés de ce film dépendent de la température du substrat, de l'endroit où il est déposé (sur l'anode ou la cathode), des pressions et débit des différents gaz ainsi que de la puissance radiofréquence injectée.

Dans l'exemple suivant on décrit un empilement réalisé selon l'invention. Sur la figure 3 sont représentés un substrat de molydbène 31 sur lequel est déposé une couche d'argent 32 d'épaisseur 150 nm recouverte d'une couche à bas indice 33 en fluorure de thorium d'épaisseur $e_1$ = 1,96 micromètre, d'une couche de séléniure de zinc ZnSe à haut indice 34 d'épaisseur $e_2$ = 1,13 micromètre, d'une couche de fluorure de thorium 35 analogue à la couche 33 et d'une couche composite 36. Cette dernière comporte une couche de base à haut indice 37 en séléniure de zinc d'épaisseur e = 0,995 micromètre et une couche superficielle en silicium amorphe hydrogéné 38 d'épaisseur 0,10 micromètre. L'épaisseur optique de la couche composite est égale à un quart de longueur d'onde soit 2,65 micromètres pour une utilisation à 10,6 micromètres. Les couches d'argent, de ThF$_4$ et de ZnSe sont déposées par évaporation sous vide, et la couche de silicium amorphe selon la méthode décrite dans l'exemple ci-dessus.

Un tel revêtement présente une réflectance égale à 0,9975 et possède également une bonne tenue en puissance au flux laser. Pour comparaison, lorsque la dernière couche est composée de ZnSe en quart d'onde la réflectance n'est que de 0,997 et la tenue mécanique et aux agents chimiques est moins bonne.

## Revendications

1. Miroir multidiélectrique pour réfléchir une lumière située notamment dans l'infrarouge moyen, notamment celle d'un laser à dioxyde de carbone, ce miroir comportant
   - un substrat (31),
   - un réflecteur sur ce substrat, ce réflecteur étant formé par un empilement de couches quart d'onde qui se succèdent à partir du substrat, ces couches (33, 34, 35, 36) étant essentiellement constituées de matériaux diélectriques à faible absorption pour la dite lumière à réfléchir et alternativement à bas (33, 35) et à haut (34, 36) indice de réfraction en terminant par une dernière couche (36) à indice haut, chacune de ces couches présentant une épaisseur optique voisine du quart de la longueur d'onde de cette lumière de manière à conférer une réflectance élevée au dit miroir,
   - la dernière couche du réflecteur comportant une couche superficielle de protection constituée d'un matériau diélectrique protecteur de dureté plus grande que celle dudit matériau diélectrique à haut indice,
   - ce miroir étant caractérisé par le fait qu'au moins la dernière (36) desdites couches quart d'onde de haut indice est une couche composite qui comporte
   - une couche de base (37) dont l'épaisseur optique est une fraction majoritaire de celle de ladite couche composite et qui est constituée d'un dit matériau diélectrique à faible absorption et à haut indice,
   - et ladite couche superficielle de protection (38), l'épaisseur optique de cette couche de protection constituant une fraction minoritaire de celle de ladite couche composite, ledit matériau protecteur présentant un indice de réfrection plus haut que celui dudit matériau diélectrique à faible absorption et à indice haut, de manière à obtenir à la fois une protection au moins mécanique de l'empilement et une réflectance accrue même si l'absorption dudit matériau protecteur est modérément plus élevée pour ladite lumière que celle des dits matériaux diélectriques à faible absorption.

2. Miroir selon la revendication 1, caractérisé par le fait que ledit matériau protecteur présente une structure amorphe et une absorption modérément plus élevée pour ladite lumière que celle des dits matériaux diélectriques à faible absorption.

3. Miroir selon la revendication 2, caractérisé par le fait que ledit matériau protecteur est du silicium amorphe hydrogéné.

**4.** Miroir selon la revendication 1, comportant en outre une couche métallique réflectrice (32) entre ledit substrat (31) et ledit empilement de couches quart d'onde (33, 34, 35, 36), la première (33) de ces couches quart d'onde étant à bas indice.

## Claims

**1.** A multidielectric mirror for reflecting light situated, in particular, in the mid infrared, in particular light from a carbon dioxide laser, said mirror comprising:
- a substrate (31),
- a reflector on said substrate, said reflector being made up from a stack of quarter-wavelength layers which succeed one another from the substrate, said layers (33, 34, 35, 36) being essentially constituted by dielectric materials having low absorption for said light to be reflected and being made of alternating low (33, 35) and high (34, 36) refractive index materials and terminating with a high index last layer (36), each of said layers having an optical thickness close to a quarter-wavelength of said light so as to confer high reflectance to said mirror;
- said last layer of the reflector including a protective surface layer constituted by a protective dielectric material having greater hardness than said high index dielectric material;
- said mirror being characterized in that at least the last (36) of said high index quarter-wavelength layers is a composite layer comprising:
- a base layer (37) whose optical thickness is a major fraction of the optical thickness of said composite layer and which is constituted by one of said dielectric materials having low absorption and high refractive index, and
- said protective surface layer (38), the optical thickness of said protective layer constituting a minor fraction of the optical thickness of the composite layer, said protective material having a higher refractive index than said high index and low absorption dielectric material so as to simultaneously obtain at least mechanical protection for the stack together with increased reflectance even if the absorption of said protective material for said light is moderately greater than the absorption of said low absorption dielectric materials.

**2.** A mirror according to claim 1, characterized in that said protective material has an amorphous structure and an absorption for said light which is moderately greater than the absorption of said low absorption dielectric materials.

**3.** A mirror according to claim 2, characterized in that said protective material is amorphous hydrogenated silicon.

**4.** A mirror according to claim 1, further including a reflecting metal layer (32) between said substrate (31) and said stack of quarter-wavelength layers (33, 34, 35, 36) , with the first (33) of said quarter-wavelength layers being a low index layer.

## Ansprüche

**1.** Multidielektrischer Spiegel zum Reflektieren von Licht, hauptsächlich in mittleren Infrarotbereich, insbesondere von Licht eines Kohlendioxidlasers, mit:
- einem Substrat (31), und
- einem Reflektor auf diesem Substrat, der aus einem Stapel von Viertelwellenschichten besteht, die auf dem Substrat einander folgen, wobei die Schichten (33, 34, 35, 36) im wesentlichen aus dielektrischen Materialien mit für das zu reflektierende Licht schwacher Absorption und mit abwechselnd niedrigem (33, 35) und hohem Brechungsindex (34, 36) bestehen und in einer letzten Schicht (36) mit hohem Index enden, wobei jede Schicht eine in der Nähe der Wellenlänge dieses Lichts liegende optische ricke besitzt, so daß dem Spiegel ein hoher Reflexionsfaktor verliehen wird,
- wobei die letzte Reflexionsschicht eine Oberflächenschutzschicht besitzt, die aus einem dielektrischen Schutzmaterial mit einer größeren Härte als derjenigen des dielektrischen Materials mit hohem Index besteht,
- dadurch gekennzeichnet, daß mindestens die letzte der Viertelwellenschichten mit hohem Index eine zusammengesetzte Schicht ist, die

- eine Basisschicht (37), deren optische Dicke den größeren Teil derjenigen der zusammengesetzten Schicht ausmacht und die aus dem genannten dielektrischen Material mit schwacher Absorption und hohem Index besteht,

- sowie die Oberflächenschutzschicht (38) aufweist, wobei die optische Dicke dieser Schutzschicht den kleineren Teil derjenigen der zusammengesetzten Schicht ausmacht, und wobei das Schutzmaterial einen größeren Brechungsindex als denjenigen des dielektrischen Materials mit schwacher Absorption und hohem Index aufweist, so daß zugleich ein zumindest mechanischer Schutz der Schichtfolge und ein erhöhter Reflexionsfaktor selbst dann erreicht wird, wenn die Absorption des Schutzmaterials für das genannte Licht etwas höher als diejenige der dielektrischen Materialien mit schwacher Absorption ist.

2. Spiegel nach Anspruch 1, dadurch gekennzeichnet, daß das Schutzmaterial eine amorphe Struktur und eine Absorption besitzt, die für das genannte Licht etwas höher als diejenige der dielektrischen Materialien schwacher Absorption ist.

3. Spiegel nach Anspruch 2, dadurch gekennzeichnet, daß das Schutzmaterial amorphes hydriertes Silizium ist.

4. Spiegel nach Anspruch 1, der weiter eine reflektierende Metallschicht (32) zwischen dem Substrat (31) und der Schichtfolge aus Viertelwellenschichten (33, 34, 35, 36) aufweist, wobei die erste (33) der Viertelwellenschichten einen niedrigen Index besitzt.

# FIG.1

# FIG. 2

# FIG. 3